# EUROPEAN PATENT SPECIFICATION

(11) **EP 0 987 171 B1**
(45) Date of publication and mention of the grant of the patent: **10.05.2006**
(21) Application number: 98117492.3
(22) Date of filing: 15.09.1998
(51) Int. Cl.: B62J 1/16

(54) **Mounting assembly for a reclinable baby seat**
Montagevorrichtung für neigungsverstellbaren Babysitz
Ensemble de montage pour siège inclinable de bébé

(43) Date of publication of application: 22.03.2000
(73) Proprietor: HAMAX AS, 1679 Krakeroy (NO)
(72) Inventor: Asbjorn, Eskild, 1679 Krakeroy (NO)
(74) Representative: Popp, Eugen

(56) References cited:
- EP-A- 0 832 811
- DE-A- 4 325 965
- DE-A- 19 519 853

## Description

The present invention relates to a mounting assembly for securing a baby seat on a bicycle. Particularly, the invention relates to a securement by which the baby seat can be reclined with respect to the bicycle.

Baby seats are conventionally mounted at various positions on a bicycle, but most commonly above the rear wheel of the bicycle behind the bicycle seat. It often occurs that children or babies in such seats become tired and fall asleep during travel. To sleep in the sitting position is physiologically unfavourable. In particular, the head of the baby may fall forward or to the side in a position which could have negative consequences for the vertebra of the neck and back.

The German published application DE-A 43 25 965 discloses a baby seat for a bicycle by which the back portion of the seat is rotatable with respect to the sitting portion. When the baby falls asleep, the back portion can be rotated and fixed in a flatter position. The German patent DE-C 195 19 835 shows a similar construction by which the back portion of the seat is rotatably coupled to the sitting and leg portion of the seat. In both conventional baby seats, a relatively complicated coupling mechanism is required to adjustably pivot the back portion of the seat. In addition, two separate moulding operations are required to produce the back and seat portions of the baby seat which are then mechanically coupled to one another.

The document EP-A-0 832 811 describes a baby seat for fastening to a bicycle according to the preamble of claim 1. This document discloses a seat where the back portion and the sitting portion are formed as a single unit, wherein the whole seat can be rotated around an axis perpendicular to the plane of the bicycle. The seat is engaged in slide-able contact with the bicycle fastening means by way of matching curved surfaces, such that sliding the seat over these surfaces rotates it from the sitting to the more reclined position. A conventional locking means is used to fix the position of the seat after adjustment. Within the document, no discussion is made of providing a screw thread engaged with the fastening means, thereby formulating an adjustable locking means, by allowing the angle of the seat to be both adjusted and set in an easy and inexpensive manner.

An object of the present invention is to provide an improved baby seat which allows rotation of the entire seat as a whole without the need of complicated rotational coupling mechanisms.

According to the present invention a mounting assembly is provided as defined in Claim 1. Carrier means are provided which may be fixed to the bicycle and include a support bracket to be located under the baby seat. An adapter element is then fixed to the support bracket, while the adapter element is constructed to slideably engage with the underside wall of the baby seat in a manner to allow rotation of the seat as a whole. The baby seat can then rotate about an axis perpendicular to the plane of the bicycle.

An adjustment mechanism is provided which is fixed to a wall of the baby seat and also engages the adapter element mounted on the support bracket. Operation of the adjustment mechanism allows the angle of rotation of the baby seat with respect to the adapter element and therefore with respect to the bicycle to be adjusted. This adjustment mechanism comprises a screw means, which is rotatably mounted in a boss, and is fixed to the baby seat. The screw means, is further engaged with a rack portion which forms part of the said adapter element.

The underside wall of the baby seat is preferably fitted with slide members having surfaces which engage with surfaces of slide portions of the adapter element. The curvature of these surfaces match one another to provide mechanical support of the baby seat on the one hand and to provide a smooth sliding for adjustment of the angle of the baby seat. Preferably, the radius of curvature of these surfaces is selected to be the distance from the center of gravity of the baby seat to the surfaces. This structure ensures a smooth sliding of the surfaces during rotation without catching or jamming effects.

Further objects and advantages of the present invention will become apparent from the following description of embodiments in conjunction with the drawings.
Fig. 1 shows a side view of the combined baby seat and mounting assembly according to a first embodiment of the invention;
Fig. 2 shows a cross-sectional view of the mounting assembly where the baby seat is in the upright normal position;
Fig. 3 shows a cross-sectional view by which the seat is rotated backwardly into the sleeping position.

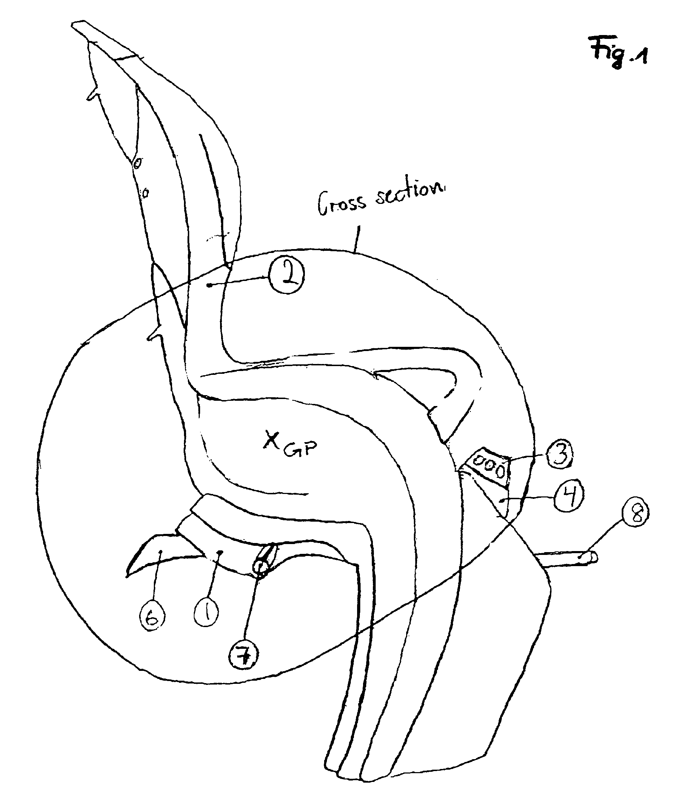

Referring to Fig. 1, the baby seat 2 used with the assembly of the present invention is a single integrated shell. Normally such seats are injection moulded and form an integral structure. The mounting assembly of the embodiment comprises carrier means which include connector rods 8, the free ends of which may be fixed to the bicycle by known means. In this embodiment, the baby seat would be mounted behind the bicycle seat however the present invention is not restricted to this configuration. The mounting assembly could for example be supported on the cross-bars between the bicycle seat and the handle bars.

The connector rods 8 preferably extend through holes provided in the front wall of the baby seat and secure the support bracket 6 disposed beneath the baby seat 2. The adapter element 1 rests on the seat bracket 6 and is held in fixed engagement by means of the two slide members 9. The support bracket 6 is held in fixed engagement by means of a securement shaft 7.

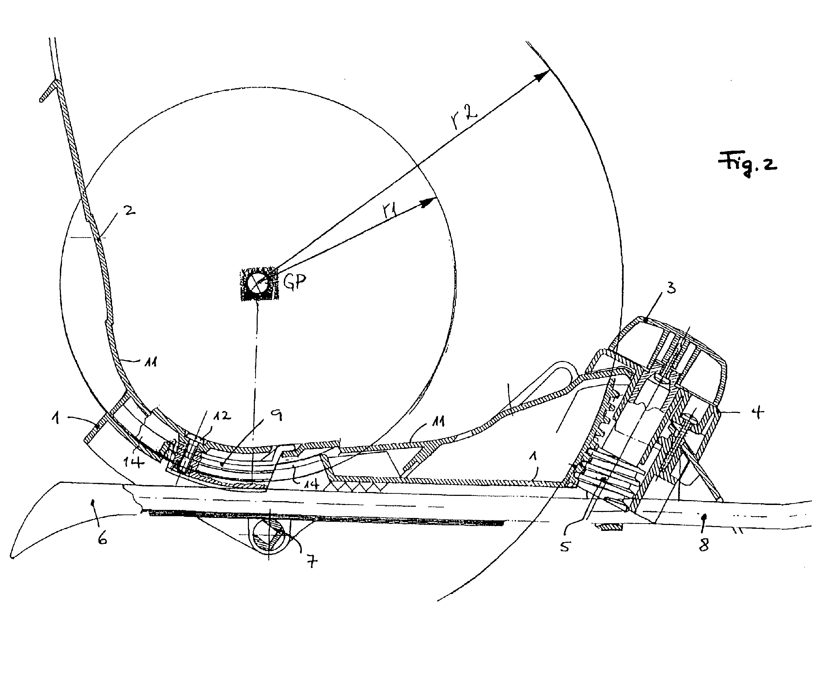

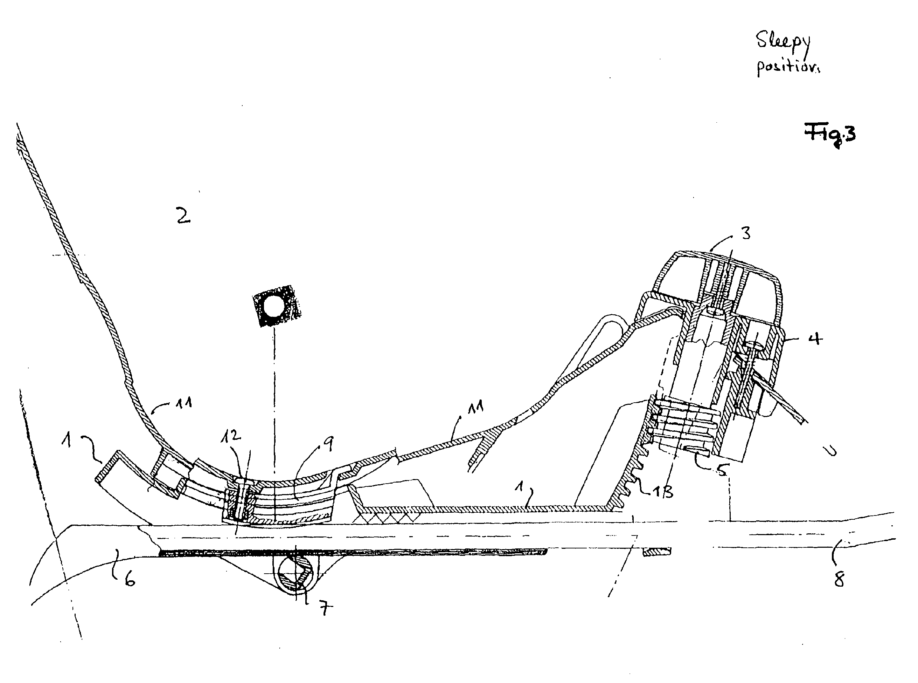

The securement shaft 7 includes eccentric portions (not shown) which urge support bracket 6 into fixed engagement with the adapter element 1. As better shown in Figures 2 and 3, the engaging surfaces of the adapter element 1 and support bracket 3 may have interlocking ridges which are formed to run perpendicular to the lengthwise direction of the bicycle or the lengthwise direction of the support bracket 6. When the securement shaft 7 is rotated to the open position, the cam surfaces of the eccentric portions of the shaft allow the support bracket 6 to be released from the adapter element 1. In the released position, the two members can be moved relative to one another to provide adjustment in the lengthwise direction.

Again referring to Fig. 2, the adapter element 1 includes slide portions 14 which have curved surfaces. The underside wall 11 of the baby seat 2 is fitted with slide members 9. Slide members 9 are fixed to the underside wall 11 by fastening means, preferably a screw 12. The slide members also comprise curved surfaces which are matched in their curvature with the surfaces of the slide portion 14 of the adapter 1. The slide members also helps to fix the adapter element 1 to the seat 2.

Fig. 2 shows the condition in which the baby seat is in the normal seating position whereas in Fig. 3, the slide members have been displaced along their curved surfaces with respect to the slide portions 14 of the adapter. In Figure 3 the baby seat as a whole is reclined to take on the sleeping position.

An adjustment mechanism 3, 4, 5 is provided at the forward portion of the baby seat as can also be seen in Fig. 1.

Preferably, the adjustment mechanism comprises a boss 4 fixed to the underside wall 11 of the baby seat. The boss carries an adjusting wheel 3, which is rigidly connected to a screw or spindle 5. The screw means 5 engage with a rack portion 13 of the adapter element 1. As shown in Fig. 2, the adjustment screw 5 has been turned to pull down the front portion of the baby seat to arrive at the normal upright position. In Fig.3, the adjustment wheel has been turned such that the screw 5 now engages the upper portion of the rack 13. In performing this adjustment, the front portion of the baby seat is raised whereby the curved surfaces of the slide elements 9 and slide portions 14 translate with respect to one another and the seat takes on the sleeping position.

The adjustment mechanism of the present embodiment is located at a front portion of the seat, preferably between the wells of the seat intended for the baby's legs. In another embodiment, the adjustment wheel could also be disposed externally on the back of the baby seat, whereby the adjustment screw would engage a rack located on the rear end of the adapter element 1.

As mentioned above, the curved surfaces of the slide elements 9 and the slide portions 14 are matched with one another. It is particularly preferred that the radius of curvature of these surfaces correspond to the distance from the gravity point or center of gravity (GP) to the surfaces themselves as indicated with r1 in Fig. 2. This arrangement ensures a smooth sliding of the surfaces with respect to one another during the adjustment operation. If the weight bearing on the engaging surfaces were offset, the load on the surfaces would be uneven leading to an uneven distribution of the frictional forces arising on the surfaces during rotation. This could lead to catching or jamming during rotation, which is however substantially avoided by the present arrangement.

In addition, the structure and weight distribution of the entire seat is designed such that the gravity point of the seat remains unchanged even when the seat is tilted from the upright position to the sleeping position. This also improves reliability in the sliding operation from the normal upright to the sleeping position.

The amount of rotation from the upright position to the reclined sleeping position can be designed to have a suitable value. Preferably, the seat can be rotated backwardly by an angle of 10° to 20°, most preferably from 12° to 15°.

The cross-sectional views in Fig. 2 and 3 show sections of one slide element engaging with one slide portion of the adapter element 1. Preferably, two such slides are located parallel to one another in the lengthwise direction of the bicycle and are fastened to the underside wall 11 of the main seat 2 holding the adapter element 1 in place.

## Claims

1. A baby seat having a mounting for use on a bicycle comprising:
carrier means (6,8) fixable to the bicycle including a support bracket (6),
an adapter element (1) fixable to the support bracket (6), the adapter element (1) being slideably engaged with the underside wall (11) of the baby seat (2) to allow rotation of the baby seat as a whole when mounted on the bicycle about an axis perpendicular to the plane of the bicycle,
an adjustment mechanism (3,4,5) engaged with said adapter element (1) and said underside wall (11) of the baby seat (2) so as to adjust the angle of rotation of the baby seat (2) with respect to the adapter element (1),
**characterised in that**
said adjustment mechanism comprises a screw means (5) rotatably mounted in a boss (4) fixed to the baby seat (2), the screw means (5) being engaged with a rack portion (13) of the adapter element (1).

2. The baby seat having a mounting for use on a bicycle of Claim 1, wherein the underside wall (11) is fitted with slide members (9) with surfaces having a curvature which matches the curvature of surfaces of a slide portions (14) of the adapter element (1).

3. The baby seat having a mounting for use on a bicycle of Claim 2, wherein the radius of curvature of the surfaces of slide members (9) and matching surfaces of the slide portions (14) corresponds to the distance (r1) from the center of gravity (GP) of the baby seat (2) to said surfaces.

4. The baby seat having a mounting for use on a bicycle of anyone of the Claims 1 to 3, wherein the baby seat (2) is constructed such that the center of gravity (GP) thereof remains unchanged upon rotation of the baby seat (2).

5. The baby seat having a mounting for use on a bicycle of any one of the claims 1 to 4, wherein the adapter element (1) is releaseably fixed to the support bracket (6) such that the relative position of the adapter element (1) with respect to the support bracket (6) can be adjusted in the travel direction of the bicycle.

## Patentansprüche

1. Kindersitz mit einer Halterung zur Verwendung an einem Fahrrad, Folgendes umfassend:
Trägereinrichtungen (6, 8) mit einer Stützauflage (6), die am Fahrrad befestigt werden können,
ein Anpassstück (1), das an der Stützauflage (6) befestigt werden kann, wobei das Anpassstück (1) gleitbeweglich mit der Unterseitenwand (1) des Kindersitzes (2) in Eingriff ist, um eine Drehung des Kindersitzes als Ganzes, wenn er am Fahrrad angebacht ist, um eine zur Ebene des Fahrrads senkrechte Ebene zuzulassen,
einen Einstellmechanismus (3, 4, 5), der mit dem Anpassstück (1) und der Unterseitenwand (11) des Kindersitzes (2) in Eingriff ist, um den Drehwinkel des Kindersitzes (2) im Hinblick auf das Anpassstück (1) einzustellen,
**dadurch gekennzeichnet, dass**
der Einstellmechanismus eine Schraubeneinrichtung (5) umfasst, die drehbar in einer am Kindersitz (2) fixierten Erhebung (4) angebracht ist, wobei die Schraubeneinrichtung (5) mit einem Zahnstangenabschnitt (13) des Anpassstücks (1) in Eingriff steht.

2. Kindersitz nach Anspruch 1, mit einer Halterung zur Verwendung an einem Fahrrad, wobei die Unterseitenwand (11) mit Gleitorganen (9) mit Flächen, die eine Krümmung aufweisen, ausgestattet ist, welche der Krümmung von Flächen von Gleitabschnitten (14) des Anpassstücks (1) angepasst sind.

3. Kindersitz nach Anspruch 2, mit einer Halterung zur Verwendung an einem Fahrrad, wobei der Krümmungsradius der Flächen der Gleiteinrichtungen (9) und die angepassten Flächen der Gleitabschnitte (14) dem Abstand (r1) vom Schwerpunkt (GP) des Kindersitzes (2) zu den Flächen entspricht.

4. Kindersitz nach einem der Ansprüche 1 bis 3, mit einer Halterung zur Verwendung an einem Fahrrad, wobei der Kindersitz (2) so aufgebaut ist, dass sein Schwerpunkt (GP) beim Drehen des Kindersitzes (2) unverändert bleibt.

5. Kindersitz nach einem der Ansprüche 1 bis 4, mit einer Halterung zur Verwendung an einem Fahrrad, wobei das Anpassstück (1) lösbar an der Stützauflage (6) derart angebracht ist, dass die relative Stellung des Anpassstücks (1) im Hinblick auf die Stützauflage in der Fahrtrichtung des Fahrrads eingestellt werden kann.

## Revendications

1. Siège pour bébé muni d'un moyen de montage pour une utilisation, sur une bicyclette, comprenant:
- des moyens porteurs (6, 8) pouvant être fixés sur la bicyclette comprenant un support (6);
- un élément d'adaptation (1) pouvant être fixé sur le support (6), l'élément d'adaptation (1) pouvant coopérer, de façon coulissante, avec la paroi de dessous (11) du siège pour, bébé (2) afin de permettre une rotation du siège pour bébé dans son ensemble, lorsqu'il est monté sur là bicyclette, autour d'un axe perpendiculaire au plan de la bicyclette ;
- un mécanisme de réglage (3, 4, 5) coopérant avec ledit élément d'adaptation (1) et ladite paroi de dessous (11) du siège pour bébé (2) afin de régler l'angle de rotation du siège pour bébé (2) par rapport à l'élément. d'adaptation (1);
**caractérisé en ce que** ledit mécanisme de réglage comprend un moyen de vis (5) monté rotatif dans un bossage (4) fixé sur le siège pour bébé (2), le moyen de vis (5) pouvant coopérer avec une partie de crémaillère (13) de l'élément d'adaptation (1).

2. Siège pour bébé muni d'un moyen de montage pour une utilisation sur une bicyclette selon la revendication 1. dans lequel la paroi de dessous (11) est munie de pièces de coulissement (9) présentant des surfaces ayant une courbure s'adaptant à la courbure des surfaces d'une partie de coulissement (14) de l'élément d'adaptation (1).

3. Siège pour bébé muni d'un moyen de montage pour une utilisation sur une bicyclette selon la revendication 2, dans lequel le rayon de courbure des surfaces des pièces de coulissement (9) et des surfaces d'adaptation des parties de coulissement (14) correspond à la distance (r1) du centre de gravité (GP) du siège pour bébé (2) auxdites surfaces.

4. Siège pour bébé muni d'un moyen de montage pour une utilisation sur une bicyclette selon l'une quelconque des revendications 1 à 3. dans lequel le siège pour bébé (2) est constitué de telle façon que son centre de gravité (GP) reste inchangé lors d'une rotation du siège pour bébé (2).

5. Siège pour bébé muni d'un moyen de montage pour une utilisation sur une bicyclette selon l'une Quelconque des revendications 1 à 4, dans lequel l'élément d'adaptation (1) est fixé, de façon amovible, sur le support (6) de telle façon que la position relative de l'élément d'adaptation (1) par rapport au support (6) puisse être réglée dans la direction de déplacement de la bicyclette.
